(19) Europäisches Patentamt
European Patent Office
Office européen des brevets

(11) EP 1 955 873 B1

(12) **EUROPEAN PATENT SPECIFICATION**

(45) Date of publication and mention of the grant of the patent:
**18.01.2012 Bulletin 2012/03**

(21) Application number: **06833580.1**

(22) Date of filing: **29.11.2006**

(51) Int Cl.:
***B60C 9/00*** *(2006.01)* ***B60C 9/08*** *(2006.01)*
***B60C 9/18*** *(2006.01)* ***B60C 9/20*** *(2006.01)*

(86) International application number:
**PCT/JP2006/323776**

(87) International publication number:
**WO 2007/063875 (07.06.2007 Gazette 2007/23)**

(54) **PNEUMATIC TIRE FOR MOTORCYCLE**

LUFTREIFEN FÜR MOTORRAD

PNEUMATIQUE POUR MOTOCYCLETTE

(84) Designated Contracting States:
**DE ES FR GB IT**

(30) Priority: **29.11.2005 JP 2005344489**
**26.12.2005 JP 2005372133**

(43) Date of publication of application:
**13.08.2008 Bulletin 2008/33**

(73) Proprietor: **Bridgestone Corporation**
**Tokyo 104-0031 (JP)**

(72) Inventors:
- **YAMAMOTO, Masahiko,**
**c/o BRIDGESTONE CORPORATION**
**Kodaira-shi, Tokyo 1870031 (JP)**
- **AKAHANE, Hidenobu,**
**c/o BRIDGESTONE CORPORATION**
**Kodaira-shi, Tokyo 1870031 (JP)**

(74) Representative: **Whalley, Kevin**
**Marks & Clerk LLP**
**90 Long Acre**
**London WC2E 9RA (GB)**

(56) References cited:
**WO-A1-2004/014668**
**WO-A1-2006/080253**
**JP-A- 2000 142 024**
**JP-A- 2001 295 134**
**JP-A- 2001 334 807**
**JP-A- 2002 339 275**
**JP-A- 2003 013 326**
**JP-A- 2004 091 969**
**JP-A- 2005 313 576**
**JP-A- 2005 535 505**
**JP-A- 2006 123 649**
**JP-A- 2006 224 949**
**JP-A- 2006 256 600**
**JP-A- 2006 315 515**
**JP-A- 2006 321 383**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 955 873 B1

## Description

### Technical Field

The present invention relates to a pneumatic tire for a motorcycle (hereinafter, also simply referred to as "tire"). More specifically, the present invention relates to a high-performance pneumatic tire for a motorcycle, wherein the tire is optimized in the ground contact shape and the ground contact pressure distribution during high-speed running to realize excellent driving stability and relates to a high-performance pneumatic tire for a motorcycle, wherein the tire is excellent in gripping force and is stable in the behavior near its cornering limit to realize excellent cornering ability.

### Background Art

As a pneumatic tire for a motorcycle, a tire improved in the traction ability by arranging at least one belt layer at the outside, in the radial direction, of a carcass has been developed. The carcass is composed of at least one ply of cords (for example, polyethylene terephthalate (PET) cords or rayon cords) extending at an tilting angle of 75 to 90° with respect to a tread circumferential line. The belt is composed of a spirally-wound strip-shaped ply formed by coating one or a plurality of cords with rubber. In this kind of tire, the belt is generally constituted with aromatic polyamide cords.

Such a tire having belt cords arranged approximately along the tread circumferential line has a possibility to cause a problem that so-called gripping force in cornering is low, when compared to a tire having so-called cross belts in which the belt cords are arranged so as to have a tilt with respect to the tread circumferential line. Patent Document 1 discloses, in order to solve the aforementioned problem, a use of a polyketone fiber cord as a belt material of a pneumatic radial tire for a motorcycle. It is reported that, with such a use, gripping force in cornering is improved and also traction ability is further improved.

In addition, Patent Document 2 discloses a belt-reinforcing layer formed by endlessly winding a rubberized narrow strip containing a plurality of polyketone fiber cords into a spiral shape so that the cords become substantially parallel in the tire circumferential direction, in order to highly enhance high speed durability and reduce load noises.

Patent Document 1: Japanese Unexamined Patent Application Publication No. 2000-142024 (for example, Claims)
Patent Document 2: Japanese Unexamined Patent Application Publication No. 2000-142025 (for example, Claims)

### Disclosure of Invention

As described above, the use of a polyketone fiber cord as a material for reinforcing a tire has been conventionally known. However, in pneumatic tire for a motorcycle, a polyketone fiber cord, in particular, a polyketone fiber cord having high-heat shrinkage characteristics has not been used as a reinforcing material, but a fiber cord, such as nylon, polyethylene-2,6-naphthalate (PEN), or aramide (Kevlar: registered trademark), or a steel cord has been used.

However, for example, though a nylon fiber cord, which is widely used as a tire-reinforcing cord, exhibits sufficient rigidity in the circumferential direction within a room temperature range, the elastic modulus is decreased, during running, by a change in temperature environment caused by heat generated in the tire itself, which makes it impossible to express and maintain the sufficient rigidity in the circumferential direction. In a case of using a fiber having ultra-high rigidity, such as an aramide fiber or a glass fiber, there is no shrinkage. Therefore, unevenness occurs in tension distribution in the radial direction when the tire is produced, and, as a result, disadvantageously, the fiber as a reinforcing material cannot realize sufficient rigidity in the circumferential direction. In addition, in a case of using a steel cord as a belt, there is a disadvantage that the tire weight is increased to increase fuel consumption.

Conventional tires for motorcycles using PET cords or rayon cords in carcasses are extended or softened when heated in high-speed rotation. Thus, there has also been a disadvantage that driving stability during high-speed running is deteriorated.

Accordingly, it is an object of the present invention to provide a pneumatic tire for a motorcycle, wherein the tire is optimized in the ground contact shape and the ground contact pressure distribution during high-speed running to realize excellent driving stability. Another object of the present invention is to provide a pneumatic tire for a motorcycle, wherein the tire is optimized in the ground contact shape and the ground contact pressure distribution during high-speed running to be excellent in gripping force and be stable in the behavior near its cornering limit and to realize excellent cornering ability.

In order to solve the aforementioned problems, the present invention provides a pneumatic tire for a motorcycle, which employs a multifilament-twist polyketone fiber cord, as a reinforcing material, having a total dtex value of 1000 to 20000 dtex per cord and satisfying relationships represented by the following Expressions (I) and (II):

$$\sigma \geq -0.01E + 1.2 \quad (I)$$

$$\sigma \geq 0.02 \quad (II)$$

(wherein, E is an elastic modulus (cN/dtex) at 25°C under a load of 49 N, and σ is a heat shrinkage stress (cN/dtex) at 177°C).

Preferably, the pneumatic tire for a motorcycle of the present invention includes a carcass composed of at least one ply and a belt composed of at least one layer arranged at the outside, in the tire radial direction, of a crown portion of the carcass, and the tire employs a polyketone fiber cord as a reinforcing material of the carcass or a reinforcing material of the belt.

Furthermore, preferably, the pneumatic tire for a motorcycle of the present invention includes a carcass composed of at least one ply and a belt composed of at least one layer arranged at the outside, in the tire radial direction, of a crown portion of the carcass and further includes a belt-reinforcing layer at the outside or the inside, in the tire radial direction, of the belt, and the above-described polyketone fiber cord is employed as a reinforcing material of the belt-reinforcing layer.

In the pneumatic tire for a motorcycle of the present invention, it is preferable to satisfy a relationship represented by the following expression:

$$\sigma \geq 0.4,$$

and it is also preferable to satisfy a relationship represented by the following expression:

$$1.5 \geq \sigma.$$

In addition, the aforementioned total dtex is preferably 2000 to 5000 dtex. Furthermore, it is preferable in the present invention that the polyketone fiber cord is employed in both the carcass and the belt.

According to the present invention, the ground contact shape and the ground contact pressure distribution during high-speed running are optimized, and a high-performance pneumatic tire for a motorcycle that can realize excellent driving stability can be provided. In addition, according to the present invention, the ground contact shape and the ground contact pressure distribution during high-speed running are optimized, and a high-performance pneumatic tire for a motorcycle that is excellent in gripping force to stabilize the behavior of the tire near its cornering limit and can realize excellent cornering ability can be provided. Furthermore, a reduction in weight can be achieved by using the polyketone fiber cord according to the present invention as the belt cord, instead of steel cord.

Brief Description of Drawings

Fig. 1 is a width-wise cross-sectional view illustrating a pneumatic tire for a motorcycle according to an embodiment of the present invention;

Fig. 2 is a width-wise cross-sectional view illustrating a pneumatic tire for a motorcycle according to another embodiment of the present invention; and

Fig. 3 is a width-wise cross-sectional view illustrating a pneumatic tire for a motorcycle according to another embodiment of the present invention.

Reference Numerals

1 bead core

2 carcass
3 belt (belt layer)
4 tread
5 belt-reinforcing layer

Best Modes for Carrying Out the Invention

The embodiments of the pneumatic tire for a motorcycle of the present invention will now be specifically described.

Fig. 1 shows a width-wise cross-sectional view of a pneumatic tire for a motorcycle according to a preferable embodiment of the present invention. The illustrated tire includes a carcass 2 that is composed of at least one ply (one in the illustrated example) extending in a toroidal shape between a pair of bead cores 1 respectively buried in a pair of bead portions on either sides; and a belt 3 that is composed of at least one belt layer (in the illustrated example, two layers in which cords intersect each other) having a substantially the same width as the tread width and is arranged at the outside, in the tire radial direction, of a crown portion of the carcass. Furthermore, a tread 4 is disposed at the outside, in the tire radial direction, of the belt 3.

In this preferable embodiment, it is important that the reinforcing material of either the carcass 2 or the belt 3 or preferably of the both is a polyketone fiber (hereinafter, abbreviated to "PK fiber") cord described in detail below. Such a PK fiber has, compared to conventional polyester and rayon fibers, a higher heat shrinkage stress and a 2.4 to 3.3 times high elastic modulus, and has characteristics that make the compressive force of the belt be higher than those of conventional fiber materials. Accordingly, by using this PK fiber cord as a reinforcing material, a fiber cord having high rigidity in the circumferential direction can be arranged in such a manner that the tension (residual stress) inside the tire is uniform in the radial direction. In addition, due to its thermal stability, the ground contact shape and the ground contact pressure distribution of the tire can be uniformly maintained from low speed to high speed. As a result, excellent high-speed driving stability can be realized.

Furthermore, in this preferable embodiment, desired effects due to the PK fiber cord can be obtained as long as the PK fiber cord according to the present invention is used as the reinforcing material of either the carcass 2 or the belt 3, even if other cords are those that are commonly used in the carcass 2 or the belt 3.

The PK fifer cord used in the present invention is a multifilament-twist PK fiber cord having a total dtex value of 1000 to 20000 dtex, preferably 2000 to 5000 dtex, per cord. When a total dtex per cord is less than 1000 dtex, necessary rigidity in the circumferential direction is not achieved, and a desired improvement effect in durability is not obtained. On the other hand, when exceeding 20000 dtex, the cord diameter is excessively increased, and, therefore, the amount of rubber for coating is increased. As a result, an increase in tire weight and deterioration in the ground contact at a high speed and durability level may be caused.

Furthermore, the PK fiber cord used in the present invention is required to satisfy the relationships represented by the following Expressions (I) and (II):

$$\sigma \geq -0.01E + 1.2 \qquad (I)$$

$$\sigma \geq 0.02 \qquad (II)$$

wherein, the heat shrinkage stress $\sigma$ is a stress (unit: cN/dtex) generated in a fixed cord sample having a 25 cm length and made of the aforementioned generally dipping-treated unvulcanized PK fiber cord at 177°C when it is heated at a heating rate of 5°C/min, and the elastic modulus E is that of the same PK fiber cord at 25°C under a load of 49 N and is expressed by a unit of cN/dtex calculated from the tangent line to a SS curve under a load of 49 N in a tension test according to JIS. The aforementioned Expression (I) is derived from below.

Force for keeping a change in shape of the tire during high-speed running is drag F1 passively generated by a reinforcing member against external input (centrifugal force and strain) and drag F2 actively generated by the reinforcing member by heat. A main factor controlling the F1 is rigidity EC of the reinforcing member cord, and a main factor controlling the F2 is heat shrinkage stress HF of the reinforcing member cord. That is, in order to effectively control a change in shape during high-speed running, the sum of the F1 and the F2 must be higher than a certain level. When the respective contribution ratios are represented by $\alpha$ and $\beta$ (here $\alpha > 0$ and $\beta > 0$), the following relationship is driven:

$$\alpha \times F1 + \beta \times F2 > \gamma \ (\gamma > 0).$$

Here, α, β, and γ are coefficients depending on a tire size and structure, a reinforcing member position and direction, and use environment such as a tire inner pressure, load, speed, and temperature. From the aforementioned expression, the following expression is obtained:

$$HF > -\alpha/\beta \times EC + \gamma/\beta.$$

Thus, the heat shrinkage stress is required to be in an upper region of the intercept γ/β and the gradient -α/β.

When the relationship of the aforementioned Expression (I) is satisfied, a stress (residual stress) that makes the cord in the tire shrink can realize tire reinforcement by the high elasticity and secure favorable grounding characteristics, even if the elastic modulus E is small. Furthermore, when the relationship of the aforementioned Expression (II) is not satisfied, namely, when the value of σ is lower than 0.02, the cord is loosen during the manufacturing of the tire, and, thereby, buckling tends to occur. Therefore, the effects for improving grounding characteristics due to high elasticity can not be achieved. If a cord made of a material having a σ value lower than 0.02 is tightly wound by modifying a manufacturing process, uniformity in the tire circumferential direction and radial direction is lost to cause deterioration in the uniformity of the tire. As such cord physical properties, an aramide fiber cord has a high elasticity, but the value of σ is approximately zero. Thus, the aramide fiber cord does not satisfy the desired performances of the present invention. In nylon fiber and PEN fiber cords, the elastic modulus is insufficient. The present inventors have conducted intensive studies from this viewpoint and have found an application of the PK fiber cord to a tire-reinforcing material as a cord achieving appropriate physical properties satisfying the desired performances of the present invention.

The aforementioned Expression (II) preferably satisfies, for obtaining more desirable effects, a relationship represented by the following expression:

$$\sigma \geq 0.4.$$

However, when the value of σ is larger than 1.5, the shrinkage force during vulcanization becomes too large, resulting in causing cord disarray or rubber alignment disorder inside the tire. Therefore, deterioration in durability and uniformity may be caused. Accordingly, it is preferable to satisfy, as the upper limit, a relationship represented by the following expression:

$$1.5 \geq \sigma.$$

Furthermore, in the aforementioned PK fiber cord, the twist coefficient α defined by the following Expression (III):

$$\alpha = T \times D^{1/2} \qquad (III)$$

(wherein, T is twist number (turns/100 mm), and D is the total fineness (dtex)) is preferably in the range of 850 to 4000. If the twist coefficient α of the PK fiber cord is lower than 850, sufficient heat shrinkage stress cannot be realized. On the other hand, in a twist coefficient α higher than 4000, sufficient elastic modulus cannot be realized. Thus, the reinforcing ability becomes low.

Furthermore, the aforementioned PK fiber cord is preferably composed of twisted two or three filament bundles of polyketone with a fineness of 500 to 10000 dtex. If the fineness of the filament bundles used in the PK fiber cord is less than 500 dtex, both the elastic modulus and the heat shrinkage stress are insufficient. On the other hand, when the fineness is higher than 10000 dtex, the cord diameter becomes large, which makes thick embedding impossible.

Furthermore, the PK fiber cord preferably has reversibility that it shrinks at high temperature and extends by being cooled to room temperature. With this, at high temperature, namely, during high-speed running, the PK fiber cord shrinks to sufficiently inhibit the tread from extending. On the other hand, at low temperature, namely, during low-speed running, the PK fiber cord extends to secure a sufficient ground contact area of the tire.

It is preferred that polyketone as the material for the PK fiber cord is substantially composed of repeating units represented by the following General Formula (IV):

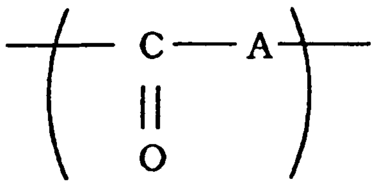

(IV)

(wherein, A denotes a moiety derived from an unsaturated compound polymerized via unsaturated bonds and may be the same or different in each repeating unit). In particular, preferred is polyketone of which 97 mol% or more of the repeating units is 1-oxotrimethylene [$-CH_2-CH_2-CO-$], more preferred is polyketone of which 99 mol% or more is 1-oxotrimethylene, and most preferred is polyketone of which 100 mol% is 1-oxotrimethylene.

Such polyketone may partially contain ketone groups bound to each other or moieties derived from an unsaturated compound bound to each other, but, preferably, portions in which the moiety derived from an unsaturated compound and the ketone group are alternately aligned are contained at a ratio of 90 mass% or more, more preferably 97 mass% or more, and most preferably 100 mass%.

In the aforementioned Formula (IV), the unsaturated compound forming the A is most preferably ethylene, but may be, for example, unsaturated hydrocarbon such as propylene, butene, pentene, cyclopentene, hexene, cyclohexene, heptene, octene, nonene, decene, dodecene, styrene, acetyrene, or arene; or a compound having an unsaturated bond, such as methyl acrylate, methyl methacrylate, vinylacetate, acrylamide, hydroxyethyl methacrylate, undecenoic acid, undecenol, 6-chlorohexene, N-vinylpyrolidone, diethylester of sulnylphosphonic acid, sodium styrenesulfonate, sodium allylsulfonate, vinylpyrolidone, or vinyl chloride.

Furthermore, as a polymerization degree of the polyketone, the limit viscosity (η) defined by the following Expression (V):

$$[\eta] = \lim_{c \to 0} \frac{(T - t)}{(t \cdot c)} \qquad (V)$$

(wherein, t and T are passing times of hexafluoroisopropanol having a purity of 98% or more and of a diluted solution of polyketone dissolved in the hexafluoroisopropanol, respectively, through a viscosity tube at 25°C; and C is a mass (g) of the solute in 100 mL of the aforementioned diluted solution) is preferably within a range of 1 to 20 dL/g and more preferably 3 to 8 dL/g. When the limit viscosity is less than 1 dL/g, the molecular weight is too small, which makes it difficult to obtain a high-strength polyketone fiber cord. In addition, troubles such as napping, breaking, and the like may occur frequently in the steps of spinning, drying, and drawing. On the other hand, when the limit viscosity is higher than 20 dL/g, the synthesis of the polymer takes time and cost. In addition, it is difficult to uniformly dissolve the polymer, and spinability and physical properties may be adversely affected.

Furthermore, the PK fiber preferably has a crystal structure having a crystallinity of 50 to 90% and a degree of crystal orientation of 95% or more. When the crystallinity is less than 50%, formation of the fiber structure is insufficient not to give a sufficient strength. In addition, there is a fear that shrinkage characteristics and dimensional stability when heated become unstable. Therefore, the crystallinity is preferably 50 to 90% and more preferably 60 to 85%.

As a method of forming a polyketone fiber are preferable (1) a method of subjecting an undrawn yarn, after spinning, to a multi-stage heat drawing in which the final drawing step of the multi-stage heat drawing is carried out at specific temperature and a draft ratio and (2) a method of subjecting an undrawn yarn, after spinning, to heat drawing and then quenching the fiber under a high tension. Desirable filaments that are suitable for producing the aforementioned polyketone fiber cord can be obtained by forming the polyketone fiber by the method (1) or (2).

Here, the method of spinning an undrawn polyketone yarn is not particularly limited and may be a conventionally known method. Examples of the method include a wet spinning method using an organic solvent, such as hexafluoroisopropanol or m-cresol, as described in Japanese Unexamined Patent Application Publication Nos. 2-112413 and 4-228613 and National Publication of International Patent Application No. 4-505344; and a wet spinning method using an aqueous solution of zinc salt, calcium salt, thiocyanate, iron salt, or the like as described in International Publication Nos. WO 99/18143 and WO 00/09611 and Japanese Unexamined Patent Application Publication Nos. 2001-164422,

2004-218189, and 2004-285221. Among them, the aforementioned wet spinning method using an aqueous solution of a salt is preferred.

In the wet spinning method using an organic solvent, an undrawn polyketone yarn can be obtained by dissolving a polyketone polymer in hexafluoroisopropanol, m-cresol, or the like at a concentration of 0.25 to 20 mass%, extruding the solution through a spinning nozzle to form a fiber, removing the solvent in a non-solvent bath of toluene, ethanol, isopropanol, n-hexane, isooctane, acetone, methyl ethyl ketone, or the like, and then washing.

In the wet spinning method using an aqueous solution, an undrawn polyketone yarn can be obtained by dissolving a polyketone polymer in an aqueous solution of, for example, zinc salt, calcium salt, thiocyanate, or iron salt at a concentration of 2 to 30 mass%, extruding the solution from a spinning nozzle into a coagulation bath at 50 to 130°C to conduct gel spinning, and then conducting desalting and drying. Here, the aqueous solution dissolving the polyketone polymer is preferably a mixture of a zinc halide and a halide of an alkali metal or an alkaline earth metal. The coagulation bath may be water, an aqueous solution of a metal salt, or an organic solvent such as acetone or methanol.

The method of drawing the resulting undrawn yarn is preferable a heat drawing method wherein the undrawn yarn is drawn by being heated to a temperature higher than the glass transition temperature of the undrawn yarn. In addition, the drawing of the undrawn yarn may be carried out as a single-stage process in the aforementioned method (2), but is preferably carried out as a multi-stage process. The heat drawing method is not particularly limited and may be a method of running the yarn on, for example, a heating roll or a heating plate. Here, the heat drawing temperature is preferably within a range of from 110°C to (a melting point of polyketone), and the total drawing ratio is preferably 10-fold or more.

When the formation of the polyketone fiber is carried out by the aforementioned method (1), the temperature at the final drawing step of the multi-stage heat drawing is preferably within the range of from 110°C to (the temperature which is lower by 3°C than that of the drawing temperature in the drawing step preceding to the final drawing step). The drawing ratio in the final drawing step of the multi-stage heat drawing is preferably in the range of 1.01 to 1.5-fold. When the formation of the polyketone fiber is carried out by the aforementioned method (2), the tension applied to the fiber after the completion of the heat drawing is preferably within the range of 0.5 to 4 cN/dtex. Also, the cooling rate in the quenching is preferably 30°C/sec or more, and the cooling-end temperature in the quenching is preferably 50°C or less. The quenching method of the heat-drawn polyketone fiber is not particularly limited and may be a conventionally known method. Specifically, a cooling method using a roll is preferred. Furthermore, since the thus obtained polyketone fiber is high in the retention of elastic strain, it is preferable that the fiber length is shorter than that after the heat drawing, and the fiber is usually subjected to relaxation heat treatment. Here, the temperature for the relaxation heat treatment is preferably within the range of 50 to 100°C, and the relaxation ratio is preferably within the range of 0.980 to 0.999-fold.

The aforementioned PK fiber cord is composed of twisted PK multifilament prepared by twisting a plurality of filaments of the aforementioned polyketone. For example, a twisted yarn cord can be obtained by preliminarily twisting each polyketone filament bundle and then twisting two or three of the filament bundles in the direction opposite to that of the preliminary twisting.

In order to mostly effectively utilize the high heat shrinkage characteristics of the PK fiber cord, it is desirable that the treatment temperature in processing and the product temperature in use are near the temperature at which the maximum heat shrinkage stress is exhibited (maximum heat shrinkage temperature). Specifically, processing temperature, such as RFL treatment temperature in adhesive treatment, which is conducted according to need, and vulcanization temperature, is 100 to 200°C, and temperature generated in a tire material due to repeating use or high-speed revolution is 100 to 250°C. Therefore, the maximum heat shrinkage temperature is preferably within the range of 100 to 250°C and more preferably within the range of 150 to 240°C.

Furthermore, in this preferable embodiment, the coating rubber of the carcass and the belt is not particularly limited, and various kinds of compounded rubber that are conventionally used can be used.

Fig. 2 shows a width-wise cross-sectional view of a pneumatic tire for a motorcycle according to another preferable embodiment of the present invention. The illustrated tire includes a carcass 2 that is composed of at least one ply (one in the illustrated example) extending in a toroidal shape between a pair of bead cores 1; and a belt 3 that is composed of at least two belt layers (two in the illustrated example) in which cords intersect each other. The belt is arranged at the outside, in the tire radial direction, of a crown portion of the carcass. The tire further includes at least one belt-reinforcing layer 5 (one in the illustrated example) of a reinforcing material substantially wound in the tire circumferential direction at the outside, in the tire radial direction, of the belt 3. The cord angle of the intersecting belts 3 is, for example, 10 to 80° with respect to a tread circumferential line.

In this preferable embodiment, it is important that the reinforcing material of the belt-reinforcing layer 5 is the PK fiber cord described in detail above. As described above, the PK fiber according to the present invention has, compared to conventional polyester and rayon fibers, a higher heat shrinkage stress and a 2.4 to 3.3 times high elastic modulus and has characteristics that make the compressive force of the belt higher than those of conventional fiber materials. Accordingly, fiber cords having high rigidity in the circumferential direction can be arranged in the state that the tension (residual stress) inside the tire is uniform in the radial direction by applying this PK fiber cord to the belt-reinforcing layer 5. In addition, its thermal stability can uniformly maintain the ground contact shape and the ground contact pressure distribution of a tire from low speed to high speed. As a result, stable straight-ahead driving and cornering ability can be realized in various speed ranges.

In this case, in particular, the aforementioned PK fiber cord has reversibility that it shrinks at high temperature and extends by being cooled to room temperature, which is preferable because the PK fiber cord in the belt-reinforcing layer shrinks, under high temperature, namely, during high-speed running, to sufficiently inhibit extension of the tread by sufficiently exhibiting the hoop effect. On the other hand, under low temperature, namely, during low-speed running, the PK fiber cord in the belt-reinforcing layer extends to secure a sufficient ground contact area of the tire.

In order to obtain predetermined effects in this preferable embodiment, one or two strings of the aforementioned polyketone fiber cords are wound, preferably, with a winding density of 20 to 50 turns per 50 mm. Furthermore, the coating rubber of the belt-reinforcing layer 5 is not particularly limited, and various kinds of compounded rubber that are conventionally used in the belt-reinforcing layer can be used. In addition, it is necessary that the belt-reinforcing layer 5 is provided as at least one layer, as shown in Fig. 2, but it is also preferred that the belt-reinforcing layer 5 is composed of at least one belt-reinforcing layer arranged so as to cover the entire width of the belt layer 3 and at least one belt-reinforcing layer arranged only at a shoulder portion (not shown). In this case, it is also important that both the belt-reinforcing layers are provided with the PK fiber cord.

Fig. 3 shows a width-wise cross-sectional view of a pneumatic tire for a motorcycle according to further another preferable embodiment of the present invention. The illustrated tire includes at least one belt-reinforcing layer 5 at the inside, in the tire radial direction, of the belt layer 3, similarly to that in the above embodiment. This tire is the same as that of the preferable embodiment shown in Fig. 2 except that the arrangement of the belt-reinforcing layer 5 is different. The desired effects of the present invention can be achieved even if the belt-reinforcing layer 5 is thus arranged at the inside, in the tire radial direction, of the belt layer 3.

Furthermore, the pneumatic tire for a motorcycle of the present invention is not particularly limited in any respect other than that the PK fiber cord is used as a reinforcing material. The desired effects of the present invention based on the PK fiber cord can be obtained as long as the PK fiber cord according to the present invention is used as the reinforcing material of any one of the carcass 2, the belt 3, and the belt-reinforcing layer 5. In the other remaining reinforcing cords, cords that are commonly used can be optionally used.

For example, not shown in the drawings, an inner liner is usually formed on the innermost layer of the tire, and a tread pattern is optionally formed on the tread surface. In addition, in the pneumatic tire of the present invention, a gas filled inside the tire can be normal air or air having a changed oxygen partial pressure, or an inert gas such as nitrogen.

## Examples

The present invention will now be described in more detail with reference to Examples.

(Example of preparation of PK fiber)

A polyketone polymer comprising a copolymer of completely alternating ethylene and carbon monoxide and having a limit viscosity of 5.3, which was prepared by a common process, was added to an aqueous solution containing 65 mass% of zinc chloride/10 mass% of sodium chloride, followed by stirring at 80°C for 2 hours for dissolution to give a dope containing 8 mass% of the polymer.

This dope was heated to 80°C and was filtered through a 20μm sintered filter and then extruded through 50 spinning holes with a spinning diameter of 0.10 mmφ at a discharge rate of 2.5 cc/min so as to pass through an air gap, warmed at 80°C, having a length of 10 mm and then to be extruded into water, at 18°C, containing 5 mass% of zinc chloride, while drawing at a rate of 3.2 m/min into a coagulated thread line.

Subsequently, the coagulated thread line was washed with a 2 mass% of sulfuric acid aqueous solution at 25°C and then with water at 30°C and then was wound up at a rate of 3.2 m/min. This coagulated thread was impregnated with IRGANOX1098 (manufactured by Ciba Specialty Chemicals Inc.) and IRGANOX1076 (manufactured by Ciba Specialty Chemicals Inc.), each in the amount of 0.05 mass% (with respect to polyketone polymer), and then was dried at 240°C and was imparted with a finishing agent to give an undrawn yarn.

The finishing agent had the following composition:

> Lauryl oleate/bisoxyethyl bisphenol A/polyether (propylene oxide/ethylene oxide = 35/65, molecular weight: 20000) /polyethylene oxide 10 mol added oleyl ether/polyethylene oxide 10 mol added castor ether/sodium stearylsulfonate/ sodium dioctylphosphate = 30/30/10/5/23/1/1 (mass% ratio).

The given undrawn yarn was applied to five-stage drawing: at 240°C in the first stage, subsequently at 258°C in the second stage, at 268°C in the third stage, and drawn at 272°C in the fourth stage, and then subsequently drawn

1.08-fold (drawing tension: 1.8 cN/dtex) at 200°C in the fifth stage, and then was wound up with a winder. The total draw ratio from the undrawn yarn to the fifth-stage drawn fiber was 17.1-fold. This fiber raw material had high physical properties: a strength of 15.6 cN/dtex, an elongation of 4.2%, and an elastic modulus of 347 cN/dtex. In addition, the fiber raw material had high heat-shrinkage characteristics: a heat shrinkage ratio of 4.3% when dried by heat treatment at 150°C for 30 minutes and a maximum heat shrinkage stress of 0.92 cN/dtex. The thus prepared PK fiber cord was used in the following Examples and so on.

Examples 1 and 2

Pneumatic tires for motorcycles which are a type shown in Fig. 1 were produced by a common method according to conditions shown in Tables 1 and 2 and described below. In Conventional Example 1, Comparative Example 1, and Examples 1-1 and 1-2, the belt cord was the same as that in Conventional Example 2. In Conventional Example 2, Comparative Example 2, and Examples 2-1 and 2-2, the carcass ply cord was the same as that in Conventional Example 1. (Tire size): rear tire 190/55R17 (in the following tests, a tire with size 120/70R17 was used as the front tire.)

(Carcass ply cord)

PET fiber cord (1670 dtex/2, 35 × 35): embedding number 60.0/50 mm
Rayon fiber cord (1840 dtex/3, 35 × 35): embedding number 60.0/50 mm
PK fiber cord (1670 dtex/2, 35 × 35 (Example 1-1), 1670 dtex/2, 20 × 20 (Example 1-2): embedding number 60.0/50 mm

(Belt cord)

Steel cord: 1 × 5 × 0.25 mm, embedding number 80/10 cm, angle with respect to the circumferential line direction 70°,
Kevlar (registered trademark) cord (Kev): 1670 dtex/2, 30 × 30, embedding number 100/10 cm, angle with respect to the circumferential line direction 70°
PK fiber cord: 1670 dtex/2, 20 × 20 (Example 2-1), 1670 dtex/2, 30 × 30 (Example 2-2), embedding number 100/10 cm, angle with respect to the circumferential line direction 70°
(Elastic modulus E of fiber cord): Calculated (unit: cN/dtex) from the tangent line to a SS curve under a load of 49 N in a cord tension test according to JIS using the elastic modulus of a generally dipping-treated unvulcanized polyketone fiber cord at 25°C under a load of 49 N as the value E.
(Heat shrinkage stress σ of fiber cord): Calculated (unit: cN/dtex) from the strain obtained by measuring a stress generated in a fixed sample with 25 cm length at 177°C when heated at a heating rate of 5°C/min using the heat shrinkage stress of a generally dipping-treated unvulcanized polyketone fiber cord at 177°C as the value σ.

Each of the prepared test tires was evaluated for in-vehicle driving stability at high speed according to the following evaluation method. The results are shown in Tables 1 and 2 below.

(In-vehicle driving stability at high speed)

The test tire was mounted on the rear wheel of a motorcycle of 750 cc displacement and was analyzed by sensory evaluation for straight running stability, cornering stability, rigidity feeling, and steering, in actual running at a speed of 150 km/h or more. The evaluation results are expressed in a scale where 10 is the perfect score.

[Table 1]

| | | Conventional Example 1 | Comparative Example 1 | Example 1-1 | Example 1-2 |
|---|---|---|---|---|---|
| Ply cord material | | PET | Rayon | PK | PK |
| Elastic modulus E | | 37 | 46 | 140 | 160 |
| Heat shrinkage stress σ | | 0.06 | 0 | 0.85 | 0.27 |
| Cord structure (dtex) | | 1670/2 | 1840/3 | 1670/2 | 1670/2 |
| Total dtex | | 3340 | 5520 | 3340 | 3340 |
| Twisting number | | 35×35 | 35×35 | 35×35 | 20×20 |
| In-vehicle driving stability at high speed (perfect score: 10) | 1. Straight running stability | 8 | 8 | 8 | 9 |
| | 2. Cornering stability | 7 | 7 | 9 | 10 |
| | 3. Rigidity feeling | 7 | 7 | 10 | 11 |
| | 4. Steering | 7 | 7 | 9 | 10 |

[Table 2]

| | | Conventional Example 2 | Comparative Example 2 | Example 2-1 | Example 2-2 |
|---|---|---|---|---|---|
| Belt material | | Kevlar | Steel | PK | PK |
| Elastic modulus E | | 170 | 220 | 160 | 145 |
| Heat shrinkage stress σ | | 0 | 0 | 0.27 | 0.53 |
| Cord structure (dtex) | | 1670/2 | - | 1670/2 | 1670/2 |
| Total dtex | | 3340 | - | 3340 | 3340 |
| Twisting number | | 30×30 | - | 20×20 | 30×30 |
| In-vehicle driving stability at high speed (perfect score: 10) | 5. Straight running stability | 8 | 8 | 8 | 8 |
| | 6. Cornering stability | 7 | 8 | 8 | 9 |
| | 7. Rigidity feeling | 7 | 9 | 9 | 10 |
| | 8. Steering | 7 | 8 | 8 | 8 |
| | 9. Tire weight | 7 | 10 | 7 | 7 |

It was confirmed from the results shown in the above Tables 1 and 2 that, in the present invention, a decrease in tire weight and excellent in-vehicle driving stability at high speed can be achieved by using a PK fiber cord having a high heat shrinkage stress in the carcass ply and/or the belt of a tire.

Example 3

As shown in Figs. 2 and 3, pneumatic radial tires having belt-reinforcing layers 5 were produced by a common method according to conditions shown in Table 3 and described below.
(Tire size): rear tire 190/55R17 (in the following tests, a tire of size 120/70R17 was used as the front tire.)
(Carcass ply cord): nylon cord (940 dtex/2), embedding number 60.0/50 mm

(Belt cord)

Steel cord: 1 × 5 × 0.25 mm, embedding number 80/10 cm, angle with respect to the circumferential line direction 70°,
Kevlar (registered trademark) cord (Kev): aramide 1670 dtex/2, 35 × 35, embedding number 100/10 cm, angle with respect to the circumferential line direction 70°
(Elastic modulus E of PK fiber cord): Calculated (unit: cN/dtex) from the tangent line to an SS curve under a load of 49 N in a tension test according to JIS using the elastic modulus of a generally dipping-treated unvulcanized polyketone fiber cord at 25°C under a load of 49 N as the value E.
(Heat shrinkage stress σ of PK fiber cord): Calculated (unit: cN/dtex) from the strain obtained by measuring a stress generated in a fixed sample with 25 cm length at 177°C when heated at a heating rate of 5°C/min using the heat shrinkage stress of a generally dipping-treated unvulcanized polyketone fiber cord at 177°C as the value σ.

Each of the prepared test tires was evaluated according to the following evaluation method. Table 3 below also shows these results.

(Low-speed driving ability)

The test tire was mounted on the rear wheel of a motorcycle of 750 cc displacement and was analyzed by sensory evaluation for straight running stability and cornering ability in actual running at a speed of 100 km/h or less. The evaluation results were expressed as indices where the result of Comparative Example 3-1 is 100. Higher values mean better results.

(High-speed driving ability)

The test tire was mounted on the rear wheel of a motorcycle of 750 cc displacement and was analyzed by sensory evaluation for straight running stability and cornering ability in actual running at a speed of 150 km/h or more. The evaluation results were expressed as indices where the result of Comparative Example 3-1 is 100. Higher values mean better results.

[Table 3]

| | | Example 3-1 | Example 3-2 | Example 3-3 | Example 3-4 | Example 3-5 |
|---|---|---|---|---|---|---|
| Belt | Material | Kev | Kev | Kev | Kev | Steel |
| Belt-reinforcing layer | Material | PK | PK | PK | PK | PK |
| | Structure | Fig. 2 | Fig. 3 | Fig. 2 | Fig. 3 | Fig. 2 |
| | Cord structure | 1670/2 | 1670/2 | 1670/2 | 1670/2 | 1670/2 |
| | Total dtex | 3340 | 3340 | 3340 | 3340 | 3340 |
| | Twisting number | 20×20 | 20×20 | 30×30 | 30×30 | 20×20 |
| | Elastic modulus E | 160 | 160 | 145 | 145 | 160 |
| | Heat shrinkage stress σ | 0.27 | 0.27 | 0.53 | 0.53 | 0.27 |
| Tire | Low-speed driving ability | 106 | 105 | 108 | 107 | 107 |
| | High-speed driving ability | 110 | 112 | 109 | 111 | 109 |

| | | Comparative Example 3-1 | Comparative Example 3-2 | Comparative Example 3-3 | Comparative Example 3-4 |
|---|---|---|---|---|---|
| Belt | Material | Kev | Kev | Kev | Kev |
| Belt-reinforcing layer | Material | nylon | nylon | alamide | alamide |
| | Structure | Fig. 2 | Fig. 3 | Fig. 2 | Fig. 3 |
| | Cord structure | 1400/2 | 1400/2 | 1400/2 | 1400/2 |
| | Total dtex | 2800 | 2800 | 2800 | 2800 |
| | Twisting number | 30×30 | 30×30 | 30×30 | 30×30 |
| | Elastic modulus E | 37 | 37 | 160 | 160 |
| | Heat shrinkage stress σ | 0.17 | 0.17 | 0.00 | 0.00 |
| Tire | Low-speed driving ability | 100 | 95 | 90 | 85 |
| | High-speed driving ability | 100 | 102 | 105 | 107 |

It was confirmed from the results shown in the above Table 3 that, in the present invention, excellent ground contact characteristics and running ability can be achieved, while maintaining rigidity in the circumferential direction in a broad speed range, by using a PK fiber having a high heat shrinkage stress in the belt-reinforcing layer of the tire.

## Claims

1. A pneumatic tire for a motorcycle, which employs a multifilament-twist polyketone fiber cord, as a reinforcing material, having a total dtex value of 1000 to 20000 dtex per cord and satisfying relationships represented by the following Expressions (I) and (II):

$$\sigma \geq -0.01E + 1.2 \qquad (I)$$

$$\sigma \geq 0.02 \qquad (II)$$

(wherein, E is an elastic modulus (cN/dtex) at 25 °C under a load of 49 N, and σ is a heat shrinkage stress (cN/dtex) at 177 °C);
the pneumatic tire comprising a carcass (2) composed of at least one ply and a belt (3) composed of at least one layer arranged at the outside, in the tire radial direction, of a crown portion of the carcass (2), wherein
a reinforcing material of the carcass (2) is the polyketone fiber cord.

2. A pneumatic tire for a motorcycle, which employs a multifilament-twist polyketone fiber cord, as a reinforcing material, having a total dtex value of 1000 to 20000 dtex per cord and satisfying relationships represented by the following Expressions (I) and (II):

$$\sigma \geq -0.01E + 1.2 \qquad (I)$$

$$\sigma \geq 0.02 \qquad (II)$$

(wherein, E is an elastic modulus (cN/dtex) at 25 °C under a load of 49 N, and σ is a heat shrinkage stress (cN/dtex) at 177 °C);
the pneumatic tire comprising a carcass (2) composed of at least one ply, a belt (3) composed of at least one layer arranged at the outside, in the tire radial direction, of a crown portion of the carcass (2), and a belt-reinforcing layer (5) at the outside, in the tire radial direction, of the belt (3), wherein
a reinforcing material of the belt-reinforcing layer (5) is the polyketone fiber cord.

3. A pneumatic tire for a motorcycle, which employs a multifilament-twist polyketone fiber cord, as a reinforcing material, having a total dtex value of 1000 to 20000 dtex per cord and satisfying relationships represented by the following Expressions (I) and (II):

$$\sigma \geq -0.01E + 1.2 \qquad (I)$$

$$\sigma \geq 0.02 \qquad (II)$$

(wherein, E is an elastic modulus (cN/dtex) at 25 °C under a load of 49 N, and σ is a heat shrinkage stress (cN/dtex) at 177 °C);
the pneumatic tire comprising a carcass (2) composed of at least one ply, a belt (3) composed of at least one layer arranged at the outside, in the tire radial direction, of a crown portion of the carcass (2), and a belt-reinforcing layer (5) at the inside, in the tire radial direction, of the belt, wherein
a reinforcing material of the belt-reinforcing layer (5) is the polyketone fiber cord.

4. The pneumatic tire for a motorcycle according to any one of Claims 1 to 3, wherein a relationship represented by the following expression:

$$\sigma \geq 0.4$$

is satisfied.

5. The pneumatic tire for a motorcycle according to any one of Claims 1 to 4, wherein a relationship represented by the following expression:

$$1.5 \geq \sigma$$

is satisfied.

6. The pneumatic tire for a motorcycle according to any one of Claims 1 to 5, wherein the total dtex is 2000 to 5000 dtex.

7. The pneumatic tire for a motorcycle according to any one of Claims 1 to 6, wherein the polyketone fiber cord is used in both the carcass (2) and the belt (3).

**Patentansprüche**

1. Luftreifen für ein Motorrad, der einen multifilamentgezwirnten Polyketonfaserkord als ein Verstärkungsmaterial mit einem gesamten dtex-Wert von 1000 bis 20000 dtex pro Kord einsetzt und die Beziehungen erfüllt, die durch die folgenden Ausdrücke (I) und (II) dargestellt werden:

$$\sigma \geq -0{,}01E + 1{,}2 \quad (I)$$

$$\sigma \geq 0{,}02 \quad (II)$$

(worin sind: E ein Elastizitätsmodul (cN/dtex) bei 25 °C unter einer Belastung von 49 N und σ eine Wärmeschrumpfungsspannung (cN/dtex) bei 177 °C);
wobei der Luftreifen eine Karkasse (2), die aus mindestens einer Lage besteht, und einen Gürtel (3) aufweist, der aus mindestens einer Schicht besteht, die auf der Außenseite in der radialen Reifenrichtung eines Zenitabschnittes der Karkasse (2) angeordnet ist, wobei
ein Verstärkungsmaterial der Karkasse (2) der Polyketonfaserkord ist.

2. Luftreifen für ein Motorrad, der einen multifilamentgezwirnten Polyketonfaserkord als ein Verstärkungsmaterial mit einem gesamten dtex-Wert von 1000 bis 20000 dtex pro Kord einsetzt und die Beziehungen erfüllt, die durch die folgenden Ausdrücke (I) und (II) dargestellt werden:

$$\sigma \geq -0{,}01E + 1{,}2 \quad (I)$$

$$\sigma \geq 0{,}02 \quad (II)$$

(worin sind: E ein Elastizitätsmodul (cN/dtex) bei 25 °C unter einer Belastung von 49 N und σ eine Wärmeschrumpfungsspannung (cN/dtex) bei 177 °C);
wobei der Luftreifen aufweist: eine Karkasse (2), die aus mindestens einer Lage besteht; einen Gürtel (3), der aus mindestens einer Schicht besteht, die auf der Außenseite in der radialen Reifenrichtung eines Zenitabschnittes der Karkasse (2) angeordnet ist; und eine Gürtelverstärkungslage (5) auf der Außenseite in der radialen Reifenrichtung des Gürtels (3), wobei

ein Verstärkungsmaterial der Gürtelverstärkungslage (5) der Polyketonfaserkord ist.

3. Luftreifen für ein Motorrad, der einen multifilamentgezwirnten Polyketonfaserkord als ein Verstärkungsmaterial mit einem gesamten dtex-Wert von 1000 bis 20000 dtex pro Kord einsetzt und die Beziehungen erfüllt, die durch die folgenden Ausdrücke (I) und (II) dargestellt werden:

$$\sigma \geq -0{,}01E + 1{,}2 \qquad (I)$$

$$\sigma \geq 0{,}02 \qquad (II)$$

(worin sind: E ein Elastizitätsmodul (cN/dtex) bei 25 °C unter einer Belastung von 49 N und σ eine Wärmeschrumpfungsspannung (cN/dtex) bei 177 °C);
wobei der Luftreifen aufweist: eine Karkasse (2), die aus mindestens einer Lage besteht; einen Gürtel (3), der aus mindestens einer Schicht besteht, die auf der Außenseite in der radialen Reifenrichtung eines Zenitabschnittes der Karkasse (2) angeordnet ist; und eine Gürtelverstärkungslage (5) auf der Innenseite in der radialen Reifenrichtung des Gürtels, wobei
ein Verstärkungsmaterial der Gürtelverstärkungslage (5) der Polyketonfaserkord ist.

4. Luftreifen für ein Motorrad nach einem der Ansprüche 1 bis 3, bei dem eine Beziehung erfüllt wird, die durch den folgenden Ausdruck dargestellt wird:

$$\sigma \geq 0{,}4$$

5. Luftreifen für ein Motorrad nach einem der Ansprüche 1 bis 4, bei dem eine Beziehung erfüllt wird, die durch den folgenden Ausdruck dargestellt wird:

$$1{,}5 \geq \sigma$$

6. Luftreifen für ein Motorrad nach einem der Ansprüche 1 bis 5, bei dem der gesamte dtex 2000 bis 5000 dtex beträgt.

7. Luftreifen für ein Motorrad nach einem der Ansprüche 1 bis 6, bei dem der Polyketonfaserkord in sowohl der Karkasse (2) als auch dem Gürtel (3) eingesetzt wird.

## Revendications

1. Bandage pneumatique pour une motocyclette, utilisant un câblé de fibres de polycétone à torsion multifilamentaire comme matériau de renforcement, ayant une valeur dtex totale comprise entre 1000 et 20000 dtex par câblé et satisfaisant des relations représentées par les expressions (I) et (II) ci-dessous :

$$\sigma \geq -0{,}01E + 1{,}2 \qquad (I)$$

$$\sigma \geq 0{,}02 \qquad (II)$$

(où E représente un module d'élasticité (cN/dtex) à 25°C en présence d'une charge de 49 N, σ représentant une contrainte de retrait thermique (cN/dtex) à 177°C) ;
le bandage pneumatique comprenant une carcasse (2) comprenant au moins une nappe, et une ceinture (3) comprenant au moins une couche agencée au niveau de l'extérieur d'une partie de sommet de la carcasse (2), dans la direction radiale du bandage pneumatique (2), dans lequel
un matériau de renforcement de la carcasse (2) est constitué par le câblé de fibres de polycétone.

**2.** Bandage pneumatique pour une motocyclette, utilisant un câblé de fibres de polycétone à torsion multifilamentaire comme matériau de renforcement, ayant une valeur dtex totale comprise entre 1000 et 20000 dtex par câblé et satisfaisant des relations représentées par les expressions (I) et (II) ci-dessous :

$$\sigma \geq -0{,}01E + 1{,}2 \qquad (I)$$

$$\sigma \geq 0{,}02 \qquad (II)$$

(où E représente un module d'élasticité (cN/dtex) à 25°C en présence d'une charge de 49 N, σ représentant une contrainte de retrait thermique (cN/dtex) à 177°C) ;
le bandage pneumatique comprenant une carcasse (2) comprenant au moins une nappe, et une ceinture (3) comprenant au moins une couche agencée au niveau de l'extérieur d'une partie de sommet de la carcasse (2), dans la direction radiale du bandage pneumatique, et une couche de renforcement de la ceinture (5) au niveau de l'extérieur de la ceinture, dans la direction radiale du bandage pneumatique, dans lequel
un matériau de renforcement de la couche de renforcement de la ceinture (5) est constitué par le câblé de fibres de polycétone.

**3.** Bandage pneumatique pour une motocyclette, utilisant un câblé de fibres de polycétone à torsion multifilamentaire comme matériau de renforcement, ayant une valeur dtex totale comprise entre 1000 et 20000 dtex par câblé et satisfaisant des relations représentées par les expressions (I) et (II) ci-dessous :

$$\sigma \geq -0{,}01E + 1{,}2 \qquad (I)$$

$$\sigma \geq 0{,}02 \qquad (II)$$

(où E représente un module d'élasticité (cN/dtex) à 25°C en présence d'une charge de 49 N, σ représentant une contrainte de retrait thermique (cN/dtex) à 177°C) ;
le bandage pneumatique comprenant une carcasse (2) comprenant au moins une nappe, une ceinture (3) comprenant au moins une couche agencée au niveau de l'extérieur d'une partie de sommet de la carcasse (2), dans la direction radiale du bandage pneumatique, et une couche de renforcement de la ceinture (5) au niveau de l'intérieur de la ceinture, dans la direction radiale du bandage pneumatique, dans lequel
un matériau de renforcement de la couche de renforcement de la ceinture (5) est constitué par le câblé de fibres de polycétone.

**4.** Bandage pneumatique pour une motocyclette selon l'une quelconque des revendications 1 à 3, dans lequel une relation représentée par l'expression ci-dessous

$$\sigma \geq 0{,}4$$

est satisfaite.

**5.** Bandage pneumatique pour une motocyclette selon l'une quelconque des revendications 1 à 4, dans lequel une relation représentée par l'expression ci-dessous :

$$1{,}5 \geq \sigma$$

est satisfaite.

**6.** Bandage pneumatique pour une motocyclette selon l'une quelconque des revendications 1 à 5, dans lequel le dtex total est compris entre 2000 et 5000 dtex.

7. Bandage pneumatique pour une motocyclette selon l'une quelconque des revendications 1 à 6, dans lequel le câblé de fibres de polycétone est utilisé dans la carcasse (2) et dans la ceinture (3).

Fig.1

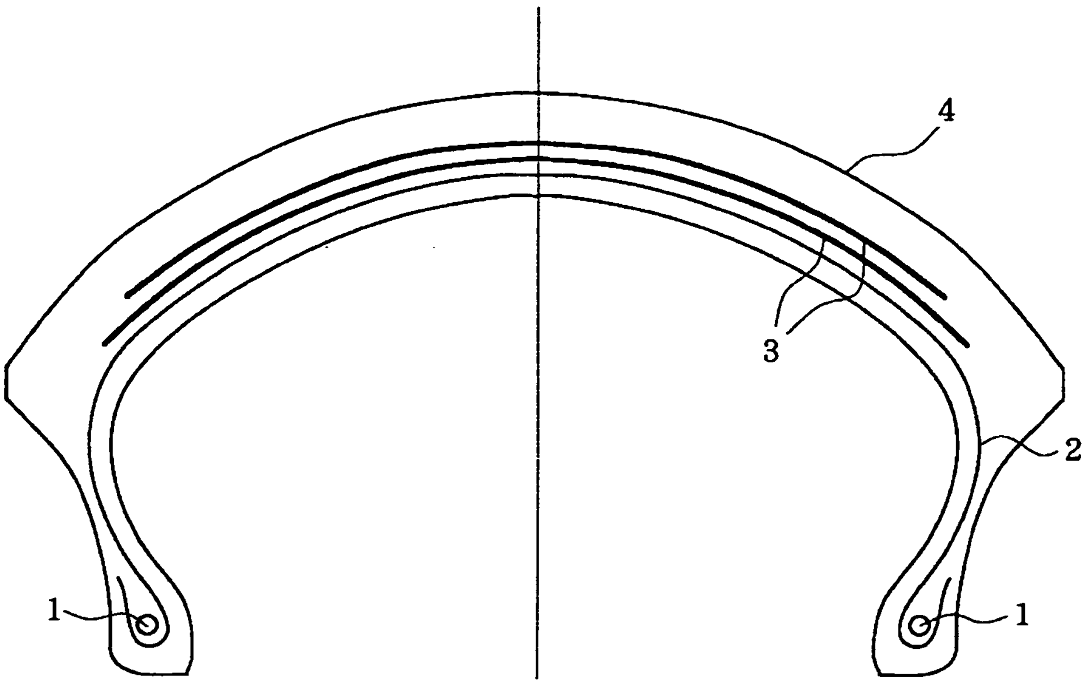


Fig.2

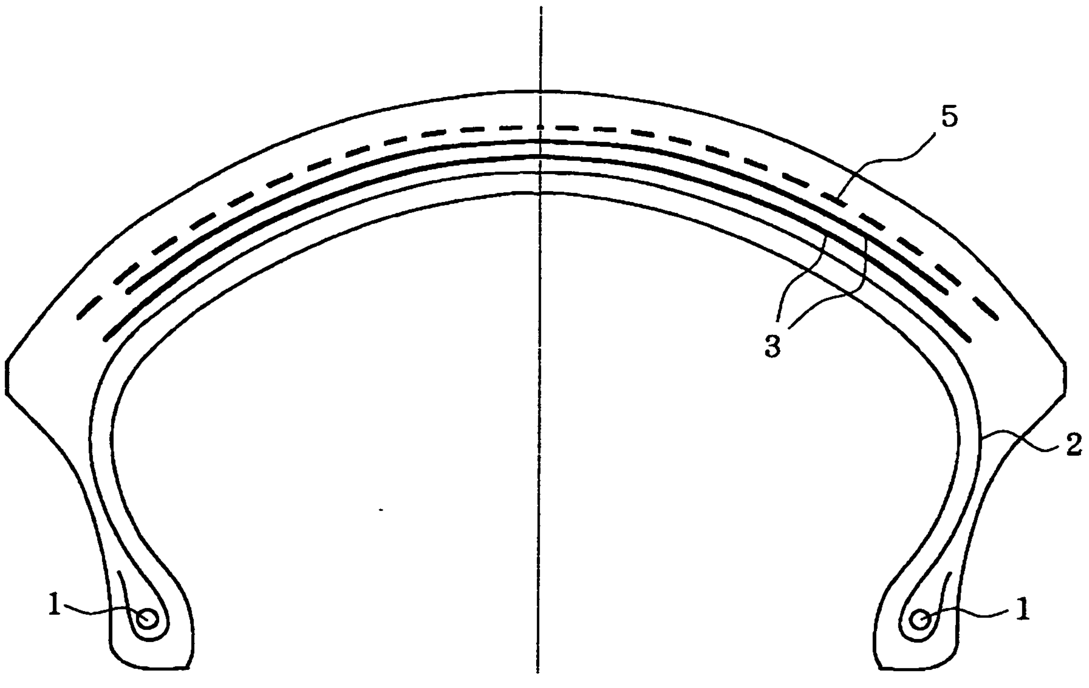

Fig.3

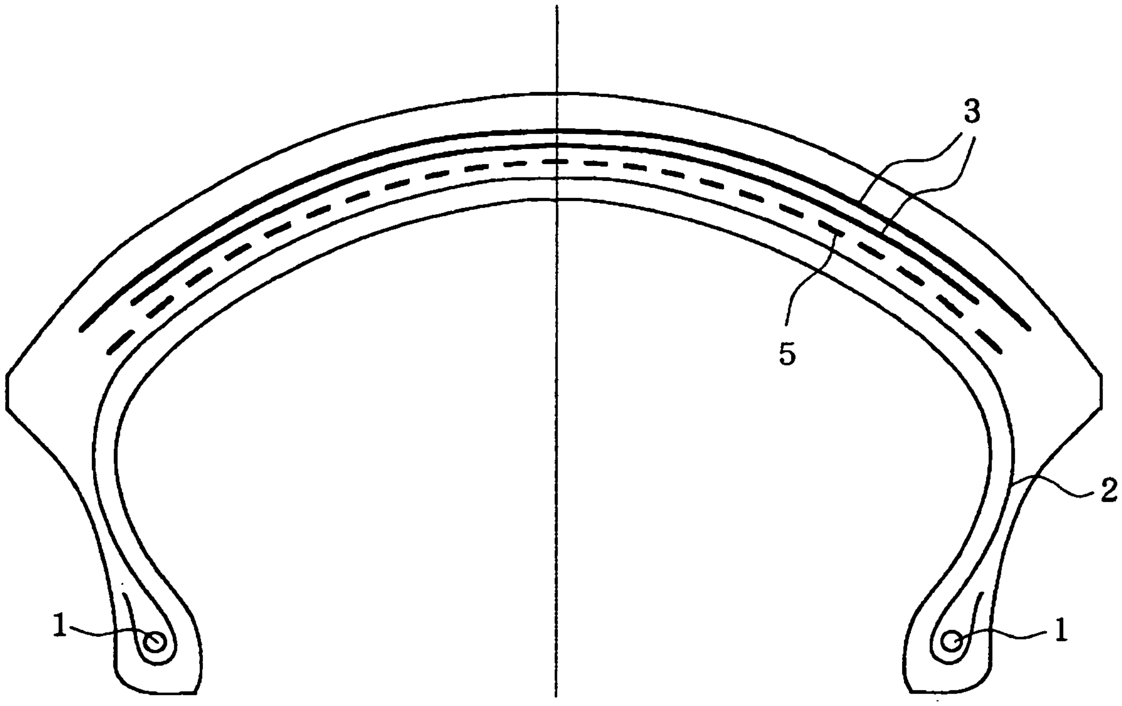

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000142024 A
- JP 2000142025 A
- JP 2112413 A
- JP 4228613 A
- JP 4505344 A
- WO 9918143 A
- WO 0009611 A
- JP 2001164422 A
- JP 2004218189 A
- JP 2004285221 A